# EUROPÄISCHE PATENTSCHRIFT

(11) **EP 3 599 936 B1**
(45) Veröffentlichungstag und Bekanntmachung des Hinweises auf die Patenterteilung: **13.01.2021**
(21) Anmeldenummer: 18713613.0
(22) Anmeldetag: 21.03.2018
(51) Int. Cl.: A47B 49/00, A47B 77/10, A47B 96/02

(54) **VORRICHTUNG ZUR ROTATORISCHEN UND TRANSLATORISCHEN BEWEGUNG EINES GEGENSTANDS**
DEVICE FOR ROTATIONALLY AND TRANSLATIONALLY MOVING AN OBJECT
DISPOSITIF DE DÉPLACEMENT EN ROTATION ET EN TRANSLATION D'UN OBJET

(30) Priorität: 22.03.2017 DE 102017106170
(43) Veröffentlichungstag der Anmeldung: 05.02.2020
(73) Patentinhaber: Paul Hettich GmbH & Co. KG, 32278 Kirchlengern (DE)
(72) Erfinder: REHAGE, Daniel, 48149 Münster (DE); MATTHES, Andreas, 09131 Chemnitz (DE); SIEGERT, Ulrich, 09212 Limbach-Oberfrohna (DE); LEHMANN, Bernd, 09116 Chemnitz (DE); WINKLER, Mathias, 09123 Chemnitz (DE); FIEDLER, Gottfried, 09337 Hohenstein-Ernstthal (DE); ENDERLEIN, Hartmut, 09127 Chemnitz (DE)
(74) Vertreter: Dantz, Jan Henning
(86) Internationale Anmeldenummer: PCT/EP2018/057148
(87) Internationale Veröffentlichungsnummer: WO 2018/172404

(56) Entgegenhaltungen:
- WO-A1-87/04325
- WO-A1-2005/065482
- DE-U1- 9 300 364

## Beschreibung

Die vorliegende Erfindung betrifft eine Vorrichtung zur rotatorischen und translatorischen Bewegung eines einen ebenen Lagerbereich aufweisenden Gegenstands relativ zu einem planparallel zu dem Lagerbereich angeordneten Lagerbereich einer Trägerplatte gemäß dem Oberbegriff des Anspruchs 1.

Derartige Vorrichtungen dienen beispielsweise dazu, schwer erreichbare Flächen in einem Stauraum oder auf einer Staufläche zugänglich zu machen. Die Erreichbarkeit von insbesondere im hinteren Bereich eines Stauraums oder einer Staufläche abgelegter Gegenstände ist oft nur sehr eingeschränkt möglich. Insbesondere benutzerunfreundlich angeordnete Stauräume, beispielsweise oberhalb der Kopfhöhe einer Person oder unterhalb der Kniehöhe sind nur schwer zu erreichen.

Ein Herausdrehen oder Herausschwenken eines Drehtellers, der in dem Stauraum oder auf der Staufläche montiert ist, erscheint zur Beseitigung dieser o.g. Nachteile sinnvoll.

Bei dem aus der Stand der Technik bekannten Vorrichtungen werden überwiegend sequenziell rotatorische und translatorische Bewegungen miteinander kombiniert, wobei diese beiden Bewegungsarten in der Regel getrennt voneinander bzw. nacheinander ablaufen. Solche Lösungen sind technich sehr aufwändig. Die Drehbewegung ist dabei häufig nur eingeschränkt möglich, insbesondere nur um 90°, was die Zugänglichkeit der in solchen Stauräumen oder auf solchen Stauflächen abgelegten Elemente weiter erschwert. Darüber hinaus weisen zahlreiche Lösungen Schwachstellen bei der Aufnahme von Stützkräften und der Stabilität sowie große Bauhöhen auf.

DE 9300364 U1 offenbart eine Auszugvorrichtung für Schrankauszüge mit einer rotatorischen und translatorischen bewegbaren Ablage Aufgabe der vorliegenden Erfindung ist es, eine verbesserte Vorrichtung zur rotatorischen und translatorischen Bewegung eines Gegenstands relativ zu einer Trägerplatte bereitzustellen, mit dem die o.g. Nachteile beseitigt sind.

Diese Aufgabe wird durch eine Vorrichtung zur rotatorischen und translatorischen Bewegung eines einen ebenen Lagerbereich aufweisenden Gegenstands relativ zu einem planparallel zu dem Lagerbereich angeordneten Lagerbereich einer Trägerplatte mit den Merkmalen des Anspruchs 1 gelöst.

Die erfindungsgemäße Vorrichtung zur rotatorischen und translatorischen Bewegung eines einen ebenen Lagerbereich aufweisenden Gegenstands relativ zu einem planparallel zu dem Lagerbereich angeordneten Lagerbereich einer Trägerplatte, bei dem der Gegenstand relativ zur Trägerplatte in einer ersten Drehrichtung drehbar und in einer vorbestimmten Richtung verschiebbar ist, zeichnet sich dadurch aus, dass einander zugewandte Lagerflächen der Lagerbereiche jeweils geschlossene, umlaufende Laufrillen aufweisen, in denen Wälzkörper geführt sind.

Die Laufrillen sind derart geformt, dass bei Krafteinwirkung auf den Gegenstand in einer in der Ebene des Lagerbereichs definierten Richtung der Gegenstand in einer zumindest teilweise zwangsgeführten, gleichzeitigen rotatorischen und translatorischen Bewegung von einer Grundposition in eine Zwischenposition bewegbar ist, bei der der Gegenstand relativ zur Trägerplatte in einer von zwei möglichen entgegengesetzten Drehrichtungen gedreht und in einer vorbestimmten Richtung verschoben ist, wobei der Gegenstand relativ zur Trägerplatte nach der Bewegung in die Zwischenposition weiter in der einen von zwei möglichen entgegengesetzten Drehrichtungen verdrehbar und entgegen der vorbestimmten Richtung verschiebbar ist und bei einer Verdrehung um 180° wieder die Grundposition einnimmt..Eine vorteilshafte Zwischenposition befindet sich ungefähr bei 90°. Der Gegenstand ist relativ zur Trägerplatte um beliebige Winkel drehbar.

Vorzugsweise besteht die zwangsgeführte, gleichzeitige rotatorische und translatorische Bewegung zwischen Gegenstand unf Trägerplatte in einem Bereich zwischen Grundposition und kurz vor Erreichen der Zwischenposition, die sich vorteilhaft bei 90° befindet, in jeder der zwei möglichen entgegengesetzten Drehrichtungen. Im Bereich der 90°-Stellung des Gegenstandes relativ zur Trägerplatte kann auch nur eine Drehbewegung vorliegen.

Durch die mit den umlaufenden Laufrillen ausgestatteten Lagerflächen der Lagerbereiche, die eine zumindest teilweise gleichzeitige rotatorische und translatorische Bewegung ermöglichen, ist der Gegenstand in einfacher Weise auf der Trägerplatte bewegbar.

Der einfache Aufbau dieser Vorrichtung durch das Einbringen der geschlossenen umlaufenden Laufrillen in die Unterseite des Gegenstands und in der Oberseite der Trägerplatte reduziert die Herstellungskosten, erhöht die Robustheit der Vorrichtung und ist benutzerfreundlich zu bedienen.

Gemäß einer vorteilhaften Ausführungsvariante der Erfindung sind in dem einen der Lagerbereiche zwei geschlossene, umlaufende Laufrillen eingebracht und in dem anderen der Lagerbereiche genau eine geschlossene, umlaufende Laufrille eingebracht.

Dabei weist besonders bevorzugt jede der drei Laufrillen mindestens eine ähnliche Verlaufs-, d.h. Querschnittskontur mit ähnlichen Grundelementen auf, wobei eine der beiden Laufrillen des einen Lagerbereiches zur Laufrille des anderen Lagerbereiches gespiegelt und die andere der beiden Laufrillen um 180° gedreht und um ein vorbestimmtes Maß verschoben zur einen der beiden Laufrillen ausgebildet ist.

Mit einer solchen Laufrillenkontur ist eine einfach zu bedienende gleichzeitige rotatorische und translatorische Bewegung des Gegenstands relativ zur Trägerplatte ermöglicht.

Die Wälzkörper sind gemäß einer bevorzugten Ausführungsvariante als Kugeln ausgebildet, was eine reibungsarme Relativbewegung des Gegenstands zur Trägerplatte ermöglicht.

Um die Auflagelast auf die einzelnen Wälzkörper bei Beibehaltung einer einfachen Laufrillengestaltung zu ermöglichen, sind bevorzugt vier solcher Wälzkörper in den Laufrillen geführt.

Die Wälzkörper sind gemäß einer weiteren bevorzugten Ausführungsvariante in einem Wälzkörperkäfig gehalten, bevorzugt verliergesichert. Dadurch ist die Zwangsführung der Wälzkörper bei der Bewegung in den Laufrillen nochmals verbessert.

Die Lagerbereiche des Gegenstands bzw. der Trägerplatte sind gemäß einer Ausführungsvariante der Erfindung einstückig mit der Trägerplatte bzw. dem Gegenstand ausgebildet.

In einer alternativen Ausführungsvariante ist zumindest einer der Lagerbereiche als separates Element ausgebildet, das in eine entsprechend geformte Aufnahme in der Trägerplatte bzw. dem Gegenstand einsetzbar ist, oder das durch Verbindungsmittel an die Trägerplatte bzw. den Gegenstand ansetzbar ist.

Gemäß einer weiteren bevorzugten Ausführungsvariante ist an oder in dem einen der Lagerbereiche eine Führung, beispielsweise ein sich in der translatorischen Bewegungsrichtung erstreckender Schlitz und an oder in dem anderen Lagerbereich ein Führungs- oder Haltelement angeordnet. Beispielsweise ist in dem anderen Lagerbereich eine Bohrung eingebracht, in dem ein Führungs- und Haltestift oder -bolzen aufgenommen ist. Auch dies trägt zur nochmaligen Verbesserung der Zwangsführung bei. Außerdem können dadurch der Gegenstand und die Trägerplatte in einfacher Weise axial aneinander gehalten werden.

Die geschlossenen umlaufenden Laufrillen sind gemäß einer weiteren bevorzugten Ausführungsvariante jeweils um den Mittelpunkt des Lagerbereichs des Gegenstands und des Lagerbereichs der Trägerplatte bis zu einem in Richtung der Translationsbewegung des Gegenstands vorderen Rand der Trägerplatte eingebracht.

Dies ermöglicht eine große Auflagefläche. Des Weiteren ergibt sich dadurch eine besonders günstige Lastaufnahme, was auch die Stabilität der gesamten Vorrichtung erhöht.

Besonders bevorzugt sind die Laufrillen so ausgestaltet, dass der Gegenstand während der gesamten Bewegung nicht einen in Richtung der Translationsbewegung des Gegenstandes hinteren Rand der Trägerplatte überragt. Dieses kann für viele Anwendungsfälle einer erfindungsgemäßen Vorrichtung von Vorteil sein. Weiterhin kann in dieser Ausgestaltung, vorzugsweise an dem hinteren Rand der Trägerplatte, eine Abkippsicherung vorhanden sein, um ein Abkippen des Gegenstandes in einer Zwischenposition zu verhindern.

Zur verbesserten Positionierung des Gegenstands in der Grundposition weisen die geschlossenen umlaufenden Laufrillen bevorzugt mehrere Rastpunkte für die Wälzkörper in der Grundposition auf, die jeweils nach einer Drehung des Gegenstands von 180° erreicht wird.

Eine weitere Vereinfachung der Bedienbarkeit der Vorrichtung wird dadurch erreicht, dass der Gegenstand relativ zur Trägerplatte in einer ersten Drehrichtung und in einer entgegengesetzten zweiten Drehrichtung um beliebige Winkel drehbar ist.

Die Trägerplatte ist nach einer bevorzugten Ausführungsvariante liegend montiert. Denkbar ist aber auch, die Trägerplatte hängendoder senkrecht stehend zu montieren.

Je nach Anwendungsfall kann ein Gegenstand auch mehr als einen Lagerbereich, vorzugsweise zwei Lagerbereiche, beispielsweise einen Lagerbereich auf der Oberseite des Gegenstandes und einen Lagerbereich auf der Unterseite des Gegenstandes, aufweisen. Somit kann der Gegenstand mit entsprechenden Lagerbereichen in oder an mehr als einer Trägerplatte zusammenwirken. Dabei kann eines der Lager als Festlager und das mindestens eine zusätzliche Lager als Loslager ausgeführt sein. Eine entsprechende Ausführung ist besonders bei hohen Gegenständen zur Erhöhung der Stabilität vorteilhaft.

Nachfolgend wird ein bevorzugtes Ausführungsbeispiel der Erfindung anhand der beiliegenden Zeichnungen näher erläutert. Es zeigen:
- Fig. 1: eine Draufsicht auf eine Ausführungsvariante einer erfindungsgemäßen Vorrichtung,
- Fig. 2: eine Schnittansicht durch eine in Fig. 1 mit II bezeichnete Schnittebene,
- Fig. 3: eine Schnittansicht durch eine in Fig. 1 mit III bezeichnete Schnittebene,
- Fig. 4: eine perspektivische Explosionsdarstellung der in Fig. 1 gezeigten Vorrichtung,
- Fig. 5: eine perspektivische Explosionsdarstellung einer alternativen Ausführungsvariante, bei der die Lagerbereiche als separate Elemente ausgebildet sind,
- Fig. 6: eine perspektivische Darstellung der als separate Elemente ausgebildeten Lagerbereiche, und
- Fig. 7: eine Draufsicht der Trägerplatte mit einem Gegenstand in einer Zwischenposition.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Trägerplatte, des Gegenstandes, des Lagerbereichs, der Wälzkörper, der Laufrille und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

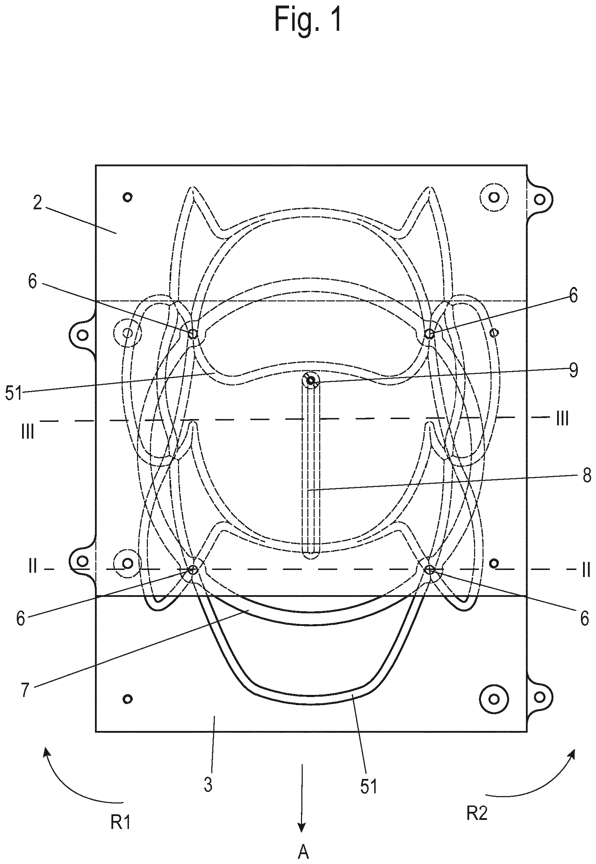

In Fig. 1 ist mit dem Bezugszeichen 2 ein Gegenstand, hier in Gestalt einer Ablage, bezeichnet, die rotatorisch und translatorisch bewegbar auf einer Trägerplatte 3 gelagert ist. Zur Lagerung sind dabei jeweilige Lagerbereiche 4, 5 des Gegenstands 2 bzw. der Trägerplatte 3 vorgesehen.

Die einander zugewandten Lagerflächen dieser Lagerbereiche 4, 5 weisen jeweils geschlossene, umlaufende Laufrillen 44, 45, 51 auf, in denen Wälzkörper 6 geführt sind. Die Wälzkörper 6 sind dabei bevorzugt als Kugeln ausgebildet.

Die Laufrillen 44, 45, 51 sind so geformt, dass bei Krafteinwirkung auf den Gegenstand 2 in einer in der Ebene des Lagerbereichs definierten Richtung A der Gegenstand 2 in einer zwangsgeführten, gleichzeitigen rotatorischen und translatorischen Bewegung von einer Ausgangsposition in eine Zwischenposition bewegbar ist, bei der der Gegenstand 2 relativ zur Trägerplatte 3 in einer Drehrichtung R₁ oder in einer Drehrichtung R₂ gedreht und in einer vorbestimmten Richtung A verschoben ist.
In einer bevorzugten Zwischenposition ist der Gegenstand 2 um ca. 90° gegenüber der Grundposition verdreht, wobei die Verschiebung in der vorbestimmten Richtung ihr Maximum erreicht.

Der Gegenstand 2 kann zurück in die Grundposition bewegt werden, indem er in der Drehrichtung R1 weitergedreht wird, hierbei wird der Gegenstand 2 relativ zur Trägerplatte 3 um insgesamt 180° verdreht und entgegen der vorbestimmten Richtung A wieder zurück in die Grundposition verschoben.

Alternativ kann der Gegenstand 2 zurück in die Grundposition bewegt werden, indem er entgegengesetzt zur Drehrichtung R1 in der Drehrichtung R2 zurückgedreht wird.

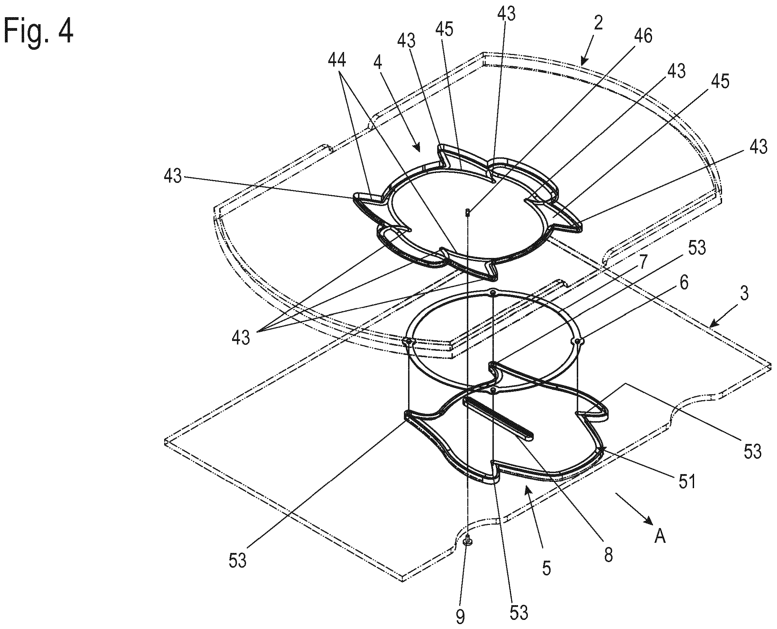

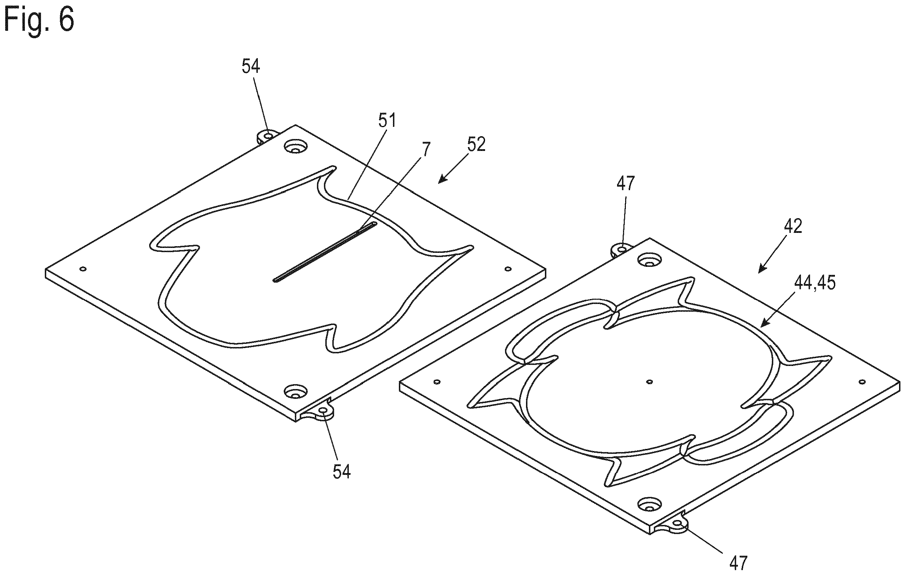

Wie in den Figuren 4 bis 6 gezeigt, sind in dem Lagerbereich 4 des Gegenstands 2 zwei geschlossene, umlaufende Laufrillen 44, 45 eingebracht. Im Lagerbereich 5 der Trägerplatte 3 ist genau eine geschlossene, umlaufende Laufrille 51 eingebracht.

Denkbar ist auch die umgekehrte Anordnung, bei der zwei Laufrillen im Lagerbereich 5 der Trägerplatte 3 und eine Laufrille im Lagerbereich 4 des Gegenstands 2 eingebracht sind.

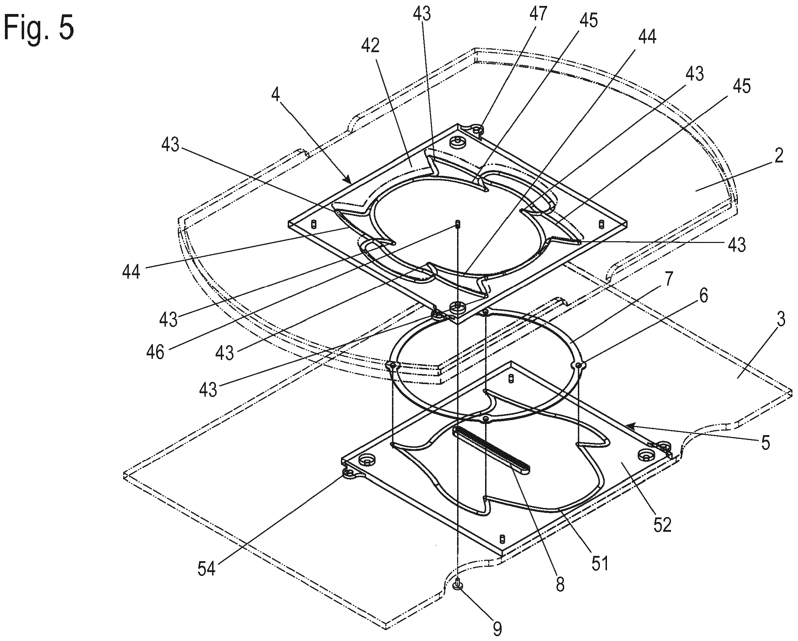

Die drei Laufrillen 44, 45, 51 sind bevorzugt von gleichem Querschnitt ähnlicher Gestalt und weisen sehr ähnliche Grundelemente auf. Dabei ist, wie in den Figuren 4 und 5 gut erkennbar, eine der beiden Laufrillen 44 des Lagerbereichs 4 des Gegenstands 2 zur Laufrille 51 gespiegelt. Die andere der beiden Laufrillen 45 ist um 180° gedreht zur Laufrille 44 und um das Maß der translatorischen Bewegung verschoben ausgebildet.

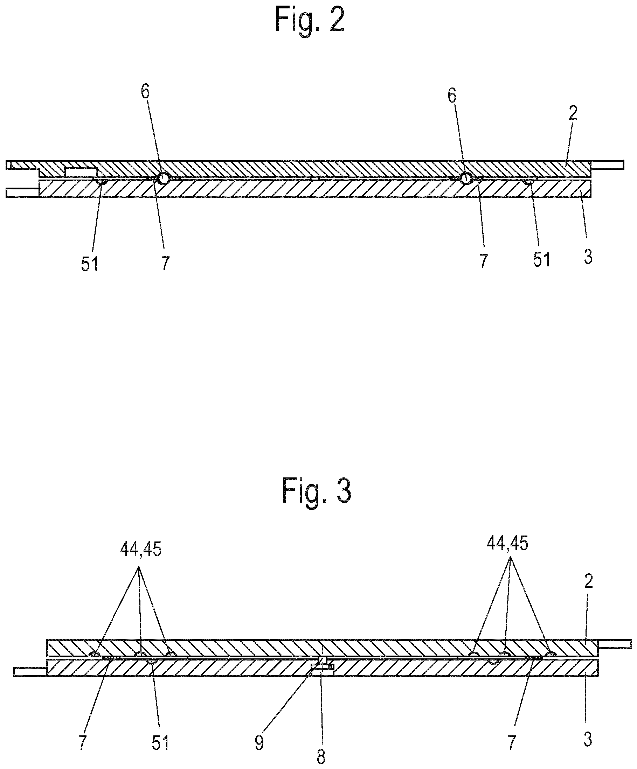

Wie in den Figuren 2, 3, 4 und 5 des Weiteren gezeigt ist, sind die hier als Kugeln ausgebildeten Wälzkörper 6 in einem Wälzkörperkäfig 7 gehalten. Die Wälzkörper 6 sind dabei bevorzugt verliergesichert in dem Wälzkörperkäfig 7 gehalten. Denkbar ist auch, die Wälzkörper lediglich in dazu vorgesehenen Öffnungen des Wälzkörperkäfigs 7 zu führen.

Zur axialen Fixierung der Trägerplatte 3 mit dem Gegenstand 2 ist in dem Lagerbereich 5 der Trägerplatte 3 eine sich in der translatorischen Bewegungsrichtung A erstreckende Führung 8 in Form eines Schlitzes eingebracht. Im Lagerbereich 4 des Gegenstands 2 ist zentral eine Bohrung 46 eingebracht. Ein Führungs- und Halteelement 9 in Form eines Stiftes durchtritt dabei die Führung 8 und die Bohrung 46 und sorgt so für eine axiale Fixierung des Gegenstands 2 an der Trägerplatte 3. Ist die Trägerplatte 3 und der darauf aufliegende Gegenstand 2 horizontal montiert, kann die axiale Sicherung auch weggelassen werden. Es kann auch mehr als eine axiale Sicherung oder eine anders ausgeführte axiale Sicherung vorhanden sein.

Während bei der in Figur 4 gezeigten Ausführungsvariante die Lagerbereiche 4, 5 einstückig mit dem Gegenstand 2 bzw. der Trägerplatte 3 ausgebildet sind, bei dem die Laufrillen 44, 45, 51 direkt in die Unterseite des Gegenstands 2 bzw. die Oberseite der Trägerplatte 3 eingebracht sind, sind die Lagerbereiche 4, 5 bei der in Figur 5 gezeigten Ausführungsvariante als separate Elemente in Form von Lagerplatten 42, 52 ausgebildet, die an der Unterseite des Gegenstands 2 bzw. an der Oberseite der Trägerplatte 3 befestigbar sind.

Dazu sind an Seitenrändern der Lagerplatte 42, 52 jeweilige Befestigungsaufnahmen 54, 47 angeformt, in die Schrauben einsetzbar sind, mit denen die Lagerplatten 42, 52 am Gegenstand 2 bzw. der Trägerplatte 3 festlegbar sind.

Um die Last auf die Wälzkörper 6 möglichst gering zu halten und gleichzeitig eine einfach aufgebaute Laufrille zu ermöglichen, sind in der hier gezeigten Ausführungsvariante vier solcher als Kugeln ausgebildeten Wälzkörper 6 in den Laufrillen 44, 45, 51 geführt. Alternativ können auch zwei oder acht Wälzkörper vorhanden sein.

Wie in den Figuren 4, 5 und 6 gezeigt ist, sind die geschlossenen umlaufenden Laufrillen 44, 45, 51 über den Mittelpunkt des Lagerbereichs 4 des Gegenstands 2 und des Lagerbereichs 5 der Trägerplatte 3 bis zum einem in Richtung A der Translationsbewegung des Gegenstands 2 vorderen Rand der Trägerplatte 3 eingebracht.

Um den Gegenstand 2 in der Ausgangsstellung, bei der der Gegenstand 2 nicht über einen vorderen Seitenrand der Trägerplatte 3 vorsteht, leicht einrasten zu lassen, weisen die geschlossenen umlaufenden Laufrillen 44, 45, 51 mehrere Rastpunkte 43, 53 für die Wälzkörper 6 in der Ausgangsstellung auf. Diese Ausgangsstellung wird dabei jeweils nach einer Drehung des Gegenstands 2 von 180° erreicht.

In einer weiteren Ausgestaltung können auch ausgewählte Zwischenpositionen Rastpunkte aufweisen, beispielsweise bei einer Verdrehung des Gegenstandes 2 zur Trägerplatte 3 um 90°.

Die Rastpunkte 43, 53 zeichnen sich dadurch aus, dass für die Bewegung aus diesen Positionen heraus ein etwas erhöhter Kraftaufwand erforderlich ist. Dieser erhöhte Kraftaufwand kann beispielsweise durch eine entsprechende Formgestaltung der Laufrillen 44, 45, 51 mit Vertiefungen oder erhöhten Noppen oder ähnlichem erzielt werden. Auch andere Elemente zur Beeinflussung der Kraft wie z.B. Magnete sind denkbar.

Bei der hier gezeigten Formgestalt der Laufrillen 44, 45, 51 ist es ermöglicht, dass der Gegenstand 2 relativ zur Trägerplatte 3 in einer Drehrichtung R₁ und auch in einer, entgegengesetzten Drehrichtung R₂ drehbar ist.

Darüber hinaus kann der Gegenstand 2 bei dieser Formgestalt der Laufrillen 44, 45, 51 um beliebige Winkel gedreht werden. So ist es möglich, den Gegenstand 2 bei einer ersten Drehbewegung um 180° zur Trägerplatte 3 in der Drehrichtung R₁ zu drehen und bei einer anschließenden Betätigung den Gegenstand 2 nochmals in die gleiche Drehrichtung R₁ zu drehen oder alternativ in der entgegengesetzten Drehrichtung R₂ zu drehen.

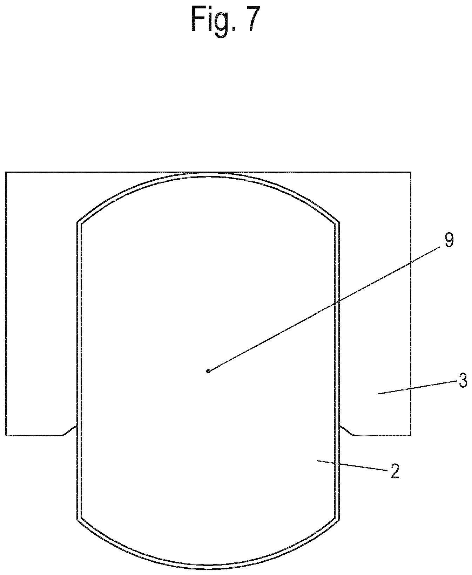

In Fig. 7 ist ersichtlich, dass der Gegenstand 2 in der Zwischenposition von ungefähr 90° nicht entgegen der Richtung A über den hinteren Rand der Trägerplatte 3 übersteht.

Die Trägerplatte 3 und der daran gehaltene Gegenstand 2 kann liegend oder auch hängend oder auch senkrecht stehend montiert werden. In der liegenden Montagestellung dient die Vorrichtung dabei bevorzugt der translatorischen und rotatorischen Bewegung eines als Ablage ausgebildeten Gegenstands 2.

### Bezugszeichenliste

- 2: Gegenstand
- 3: Trägerplatte

- 4: Lagerbereich
- 42: Lagerplatte
- 43: Rastpunkt
- 44: Laufrille
- 45: Laufrille
- 46: Bohrung
- 47: Befestigungsaufnahme

- 5: Lagerbereich
- 51: Laufrille
- 52: Lagerplatte
- 53: Rastpunkt
- 54: Befestigungsaufnahme

- 6: Wälzkörper
- 7: Wälzkörperkäfig
- 8: Führung
- 9: Führungs- und Halteelement

- A: Richtung
- R₁: Drehrichtung
- R₂: Drehrichtung

## Patentansprüche

1. Vorrichtung, aufweisend einen einen ebenen Lagerbereich (4) aufweisenden Gegenstand (2) und eine Trägerplatte (3) mit einem planparallel zu dem Lagerbereich (4) des Gegenstands (2) angeordneten Lagerbereich (5), wobei der Gegenstand (2) relativ zur Trägerplatte (3) in einer von zwei möglichen entgegengesetzten Drehrichtungen (R₁, R₂) drehbar und in einer vorbestimmten Richtung (A) verschiebbar ist, **dadurch gekennzeichnet, dass** einander zugewandte Lagerflächen der Lagerbereiche (4, 5) jeweilige geschlossene, umlaufende Laufrillen (44, 45, 51) aufweisen, in denen Wälzkörper (6) geführt sind, wobei die Laufrillen (44, 45, 51) derart geformt sind, dass bei Krafteinwirkung auf den Gegenstand (2) in einer in der Ebene des Lagerbereichs (5) definierten Richtung (A) der Gegenstand (2) in einer zumindest teilweise zwangsgeführten, gleichzeitigen rotatorischen und translatorischen Bewegung von einer Ausgangsposition in eine Zwischenposition bewegbar ist bei der der Gegenstand (2) relativ zur Trägerplatte (3) in einer von zwei möglichen entgegengesetzten Drehrichtungen (R₁, R₂) gedreht und in einer vorbestimmten Richtung (A) verschoben ist und wobei der Gegenstand (2) relativ zur Trägerplatte (3) nach der Bewegung in die Zwischenposition weiter in der einen von zwei möglichen entgegengesetzten Drehrichtungen (R₁, R₂) verdrehbar und entgegen der vorbestimmten Richtung (A) verschiebbar ist und bei einer Verdrehung um 180° wieder die Grundposition einnimmt.

2. Vorrichtung nach Anspruch 1, **dadurch gekennzeichnet, dass** in dem einen der Lagerbereiche (4) zwei geschlossene, umlaufende Laufrillen (44, 45) eingebracht sind und in dem anderen der Lagerbereiche (5) genau eine geschlossene, umlaufende Laufrille (51) eingebracht ist.

3. Vorrichtung nach einem der vorstehenden Ansprüche, **dadurch gekennzeichnet, das** die Wälzkörper (6) als Kugeln ausgebildet sind.

4. Vorrichtung nach einem der vorstehenden Ansprüche, **dadurch gekennzeichnet, das** vier voneinander beabstandet positionierte Wälzkörper (6) in den Laufrillen (44, 45, 51) geführt sind.

5. Vorrichtung nach einem der vorstehenden Ansprüche, **dadurch gekennzeichnet, das** die Wälzkörper (6) in einem Wälzkörperkäfig (7) gehalten sind, bevorzugt verliergesichert.

6. Vorrichtung nach einem der vorstehenden Ansprüche, **dadurch gekennzeichnet, das** die Lagerbereiche (4, 5) einstückig mit der Trägerplatte (3) bzw. dem Gegenstand (2) ausgebildet sind.

7. Vorrichtung nach einem der vorstehenden Ansprüche 1 bis 6, **dadurch gekennzeichnet, das** zumindest einer der Lagerbereiche (4, 5) als separates Element ausgebildet ist, das in eine entsprechend geformte Aufnahme in der Trägerplatte (3) bzw. dem Gegenstand (2) einsetzbar ist oder durch Verbindungsmittel an die Trägerplatte (3) bzw. den Gegenstand (2) ansetzbar ist.

8. Vorrichtung nach einem der vorstehenden Ansprüche 1 bis 6, **dadurch gekennzeichnet, das** in dem einen der Lagerbereiche (4, 5) eine Führung (8) und in oder an dem anderen Lagerbereich (4, 5) ein Führungs- und Halteelement (9) angeordnet ist.

9. Vorrichtung nach einem der vorstehenden Ansprüche, **dadurch gekennzeichnet, das** die geschlossenen umlaufenden Laufrillen (44, 45, 51) jeweils um den Mittelpunkt des Lagerbereichs (4) des Gegenstands (2) und des Lagerbereichs (5) der Trägerplatte (3) bis zum einem in Richtung (A) der Translationsbewegung des Gegenstands (2) vorderen Rand der Trägerplatte (3) eingebracht sind.

10. Vorrichtung nach einem der vorstehenden Ansprüche, **dadurch gekennzeichnet, das** die geschlossenen umlaufenden Laufrillen (44, 45, 51) mehrere Rastpunkte (43, 53) für die Wälzkörper (6) in der Grundposition aufweisen, die jeweils nach einer Drehung des Gegenstands (2) von 180° erreicht wird.

11. Vorrichtung nach einem der vorstehenden Ansprüche, **dadurch gekennzeichnet, dass** der Gegenstand (2) während der gesamten Bewegung nicht einen entgegen der Richtung (A) der Translationsbewegung des Gegenstandes (2) hinteren Rand der Trägerplatte (3) überragt.

12. Vorrichtung nach einem der vorstehenden Ansprüche, **dadurch gekennzeichnet, dass** der Gegenstand (2) mehr als einen Lagerbereich, vorzugsweise zwei Lagerbereiche, aufweist und mit mehr als einer Trägerplatte (3) zusammenwirkt.

13. Vorrichtung nach einem der vorstehenden Ansprüche, **dadurch gekennzeichnet, dass** die Trägerplatte (3) liegend oder hängend oder senkrecht stehend montierbar ist.

## Claims

1. A device, comprising an object (2) comprising a planar bearing region (4) and a carrier plate (3) comprising a bearing region (5) which is arranged plane-parallel to the bearing region (4) of the object (2), wherein the object (2) is rotatable in relation to the bearing plate (3) in one of two possible opposing rotational directions (R₁, R₂) and is displaceable in a predetermined direction (A), **characterized in that** bearing surfaces of the bearing regions (4, 5) facing toward one another each comprise closed, peripheral running grooves (44, 45, 51), in which roller bodies (6) are guided, wherein the running grooves (44, 45, 51) are formed in such a way that if a force acts on the object (2) in a direction (A) defined in the plane of the bearing region (5), the object (2) is movable in an at least partially positively-guided, simultaneously rotational and translational movement from a starting position into an intermediate position, during which the object (2) is rotated in relation to the bearing plate (3) in one of two possible opposing rotational directions (R₁, R₂) and is displaced in a predetermined direction (A), and wherein the object (2), after the movement into the intermediate position, is pivotable in relation to the carrier plate (3) further in the one of two possible opposing rotational directions (R₁, R₂) and is displaceable opposite to the predetermined direction (A) and occupies the base position again upon a pivot by 180°.

2. The device according to Claim 1, **characterized in that** two closed, peripheral running grooves (44, 45) are introduced into one of the bearing regions (4) and precisely one closed, peripheral running groove (51) is introduced into the other of the bearing regions (5).

3. The device according to any one of the preceding claims, **characterized in that** the roller bodies (6) are formed as balls.

4. The device according to any one of the preceding claims, **characterized in that** four roller bodies (6) positioned spaced apart from one another are guided in the running grooves (44, 45, 51).

5. The device according to any one of the preceding claims, **characterized in that** the roller bodies (6) are held in a roller body cage (7), preferably captively.

6. The device according to any one of the preceding claims, **characterized in that** the bearing regions (4, 5) are formed in one piece with the carrier plate (3) or the object (2), respectively.

7. The device according to any one of preceding Claims 1 to 6, **characterized in that** at least one of the bearing regions (4, 5) is formed as a separate element, which is insertable into a correspondingly shaped receptacle in the carrier plate (3) or the object (2) or is attachable by connecting means to the carrier plate (3) or the object (2), respectively.

8. The device according to any one of preceding Claims 1 to 6, **characterized in that** a guide (8) is arranged in one of the bearing regions (4, 5) and a guiding and holding element (9) is arranged in or on the other bearing region (4, 5).

9. The device according to any one of the preceding claims, **characterized in that** the closed peripheral running grooves (44, 45, 51) are each introduced around the center point of the bearing region (4) of the object (2) and the bearing region (5) of the carrier plate (3) up to a front edge of the carrier plate (3) in the direction (A) of the translational movement of the object (2).

10. The device according to any one of the preceding claims, **characterized in that** the closed peripheral running grooves (44, 45, 51) have multiple catch points (43, 53) for the roller bodies (6) in the base position, which are reached after each rotation of the object (2) by 180°.

11. The device according to any one of the preceding claims, **characterized in that** the object (2) does not protrude over a rear edge of the carrier plate (3) opposite to the direction (A) of the translational movement of the object (2) during the entire movement.

12. The device according to any one of the preceding claims, **characterized in that** the object (2) has more than one bearing region, preferably two bearing regions, and interacts with more than one carrier plate (3).

13. The device according to any one of the preceding claims, **characterized in that** the carrier plate (3) is installable recumbent or hanging or standing vertically.

## Revendications

1. Dispositif présentant un objet (2) présentant une zone d'appui plane (4) et une plaque de support (3) avec une zone d'appui (5) disposée parallèlement à la zone d'appui (4) de l'objet (2), dans lequel l'objet (2) peut tourner par rapport à la plaque de support (3) dans l'un de deux sens de rotation opposés possibles (R₁, R₂) et coulisser dans une direction prédéterminée (A), **caractérisé en ce que** les surfaces d'appui tournées l'une vers l'autre des zones d'appui (4, 5) présentent des rainures de roulement périphériques fermées respectives (44, 45, 51) dans lesquelles des corps roulants (6) sont guidés, dans lequel les rainures de roulement (44, 45, 51) sont formées de telle sorte que, lorsqu'une force est appliquée sur l'objet (2) dans une direction (A) définie dans le plan de la zone d'appui (5), l'objet (2) peut être déplacé dans un mouvement de rotation et de translation simultané, guidé au moins partiellement de manière forcée, d'une position initiale dans une position intermédiaire dans laquelle l'objet (2) est tourné dans l'un de deux sens de rotation opposés possibles (R₁, R₂) et déplacé dans une direction prédéterminée (A) par rapport à la plaque de support (3), et dans lequel l'objet (2), après le mouvement vers la position intermédiaire, peut être tourné davantage dans ledit un de deux sens de rotation opposés possibles (R₁, R₂) et déplacé à l'encontre de la direction prédéterminée (A) par rapport à la plaque de support (3), et reprend la position de base lorsqu'il est tourné de 180°.

2. Dispositif selon la revendication 1, **caractérisé en ce que** deux rainures de roulement périphériques fermées (44, 45) sont réalisées dans l'une des zones d'appui (4) et exactement une rainure de roulement périphérique fermée (51) est réalisée dans l'autre des zones d'appui (5).

3. Dispositif selon l'une des revendications précédentes, **caractérisé en ce que** les corps roulants (6) sont réalisés sous la forme de billes.

4. Dispositif selon l'une des revendications précédentes, **caractérisé en ce que** quatre corps roulants (6) positionnés à distance les uns des autres sont guidés dans les rainures de roulement (44, 45, 51).

5. Dispositif selon l'une des revendications précédentes, **caractérisé en ce que** les corps roulants (6) sont maintenus dans une cage à corps roulants (7), de préférence de manière imperdable.

6. Dispositif selon l'une des revendications précédentes, **caractérisé en ce que** les zones d'appui (4, 5) sont formées d'une seule pièce avec la plaque de support (3) ou l'objet (2) .

7. Dispositif selon l'une des revendications 1 à 6 précédentes, **caractérisé en ce qu'**au moins l'une des zones d'appui (4, 5) est réalisée sous la forme d'un élément séparé qui peut être inséré dans un logement de forme correspondante dans la plaque de support (3) ou l'objet (2) ou peut être monté sur la plaque de support (3) ou l'objet (2) par des moyens de liaison.

8. Dispositif selon l'une des revendications 1 à 6 précédentes, **caractérisé en ce qu'**un guide (8) est disposé dans l'une des zones d'appui (4, 5) et un élément de guidage et de maintien (9) est disposé dans ou sur l'autre zone d'appui (4, 5).

9. Dispositif selon l'une des revendications précédentes, **caractérisé en ce que** les rainures de roulement périphériques fermées (44, 45, 51) sont réalisées chacune autour du point central de la zone d'appui (4) de l'objet (2) et de la zone d'appui (5) de la plaque de support (3) jusqu'à un bord avant de la plaque de support (3) dans la direction (A) du mouvement de translation de l'objet (2).

10. Dispositif selon l'une des revendications précédentes, **caractérisé en ce que** les rainures de roulement périphériques fermées (44, 45, 51) présentent plusieurs points d'encliquetage (43, 53) pour les corps roulants (6) dans la position de base qui est atteinte chaque fois après une rotation de 180° de l'objet (2).

11. Dispositif selon l'une des revendications précédentes, **caractérisé en ce que** l'objet (2) ne dépasse pas, pendant tout le mouvement, un bord arrière de la plaque de support (3) dans la direction opposée à la direction (A) du mouvement de translation de l'objet (2).

12. Dispositif selon l'une des revendications précédentes, **caractérisé en ce que** l'objet (2) présente plus d'une zone d'appui, de préférence deux zones d'appui, et coopère avec plus d'une plaque de support (3).

13. Dispositif selon l'une des revendications précédentes, **caractérisé en ce que** la plaque de support (3) peut être montée en position horizontale, de manière suspendue ou en position verticale.
